# FASCICULE DE BREVET EUROPEEN

(11) **EP 1 267 104 B1**
(45) Date de publication et mention de la délivrance du brevet: **11.08.2004**
(21) Numéro de dépôt: 02291492.3
(22) Date de dépôt: 14.06.2002
(51) Int. Cl.: F16H 63/20, F16H 63/34

(54) **Dispositif de commande interne de boite de vitesses mécanique**
Interne Steuervorrichtung für mechanisches Wechselgetriebe
Internal control device for mechanical gearbox

(30) Priorité: 15.06.2001 FR 0107835
(43) Date de publication de la demande: 18.12.2002
(73) Titulaire: Renault s.a.s., 92100 Boulogne Billancourt (FR)
(72) Inventeur: Prenel, Jean-Marc, 78000 Versailles (FR)

(56) Documents cités:
- EP-A- 0 737 827
- DE-A- 1 500 367
- PATENT ABSTRACTS OF JAPAN vol. 1996, no. 04, 30 avril 1996 (1996-04-30) -& JP 07 332487 A (AISIN EE I KK), 22 décembre 1995 (1995-12-22)

## Description

La présente invention se rapporte à la commande interne des boîtes de vitesses mécaniques.

Plus précisément, elle concerne un dispositif de commande interne de boîte de vitesses mécanique à arbres parallèles comportant un axe de commande déplacé en rotation pour sélectionner une ligne de vitesses et en translation pour passer une vitesse sur la ligne sélectionnée, un doigt de passage des vitesses solidaire de l'axe de commande, des moyens d'interdiction du passage des vitesses non sélectionnées, et des moyens de rappel élastique de l'axe de commande sur la ligne de point mort.

Les dispositifs de commande interne de changement de vitesses de boîte de vitesses manuelle (ou mécanique) présentent une position de point mort, située généralement sur la ligne de sélection des troisième et quatrième rapports, cette position étant détectable par le conducteur à partir du levier de changement de vitesses.

La stabilité de la position de point mort est souvent assurée en tout ou partie par un système de rappel dit système de rappel 3-4 situé à l'intérieur de la boîte, faisant intervenir un ressort de rappel.

Le plus souvent, ce ressort agit sur un axe de commande interne de la boîte portant un doigt de commande qui déplace des axes de fourchettes associés à des baladeurs contrôlant le crabotage et le décrabotage des pignons fous sur leur arbre.

Dans certaines boîtes, l'axe de commande se déplace en translation pour sélectionner une ligne de vitesses, et en rotation pour engager une vitesse sur la ligne de vitesses sélectionnées; à l'inverse, dans d'autres boîtes , la sélection s'effectue par un mouvement de rotation de l'axe de commande, et le passage par un mouvement de translation. Les systèmes de rappel en position de point mort sont différents selon le fonctionnement de l'axe de commande.

On connaît un système de rappel en position de point mort d'un axe de commande déplacé en rotation pour sélectionner une ligne de vitesses et en translation pour passer une vitesse sur la ligne sélectionnées, comportant un ressort enroulé autour d'une pièce concentrique à l'axe de commande et prenant appui simultanément par deux branches d'extrémité parallèles sur un élément fixe de la boîte et sur une partie de l'axe de commande, de façon à rappeler l'axe de commande sur la ligne de point mort correspondant à l'alignement de cet élément et de cette pièce.

A l'usage, un tel système de rappel n'est pas stable, car les branches du ressort se déforment toujours, si bien qu'elles n'appuient pas simultanément sur les deux côtés de chaque élément. Or, sans les quatre points d'appui du ressort, le rappel de l'axe de commande sur la ligne de point mort n'est pas précis, et le système n'est pas stable.

Par la publication DE 1500 367, on connaît un autre système de rappel en position sur la ligne de point mort, comportant deux ressorts de rappel antagonistes montés autour d'un fourreau qui entoure l'axe de commande interne de la boîte.

La présente invention propose d'améliorer un tel dispositif en séparant les deux ressorts.

Dans ce but, elle prévoit que, le fourreau entoure l'axe de commande et le dispositif de commande interne comporte une bague, qui tourne avec le fourreau autour de l'axe de commande dans un premier sens de rotation de celui-ci en comprimant un premier ressort, sans suivre le fourreau dans le second sens de rotation.

D'autres caractéristiques et avantages de l'invention apparaîtront clairement à la lecture de la description suivants d'un mode de réalisation particulier de celle-ci, en liaison avec les dessins annexés, sur lesquels :
- la figure 1 illustre l'état de la technique connue,
- la figure 2 est une vue d'ensemble du dispositif de commande de l'invention,
- la figure 3 montre sa position de point mort, et
- les figures 4 et 5 montrent ses positions respectives sur deux lignes de sélection de part et d'autre de la position de point mort.

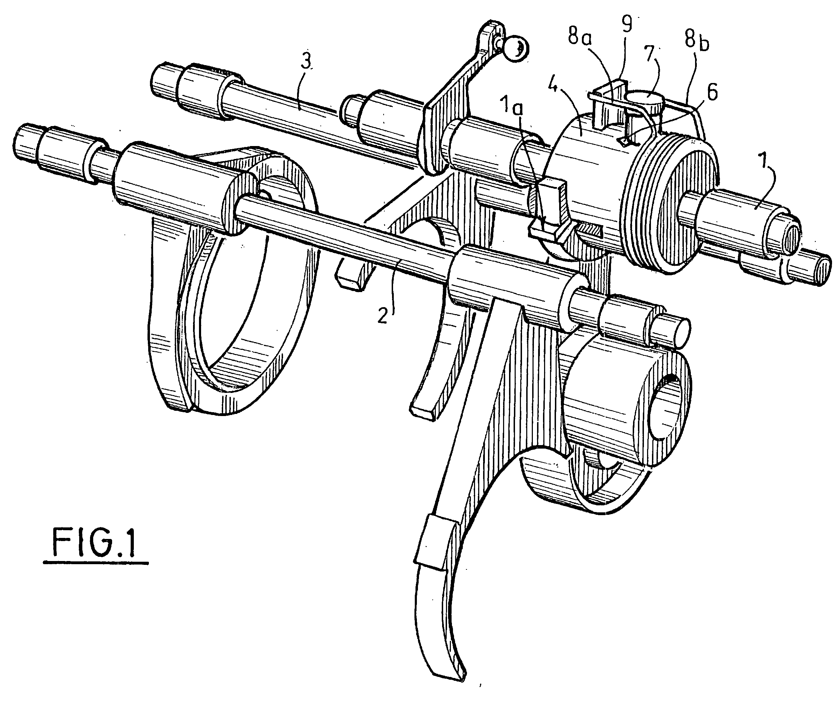

Sur la figure 1, on a représenté l'axe de commande interne 1 d'une boîte de vitesses et deux axes de commande de fourchettes 2, 3. L'axe de commande 1 est déplacé en rotation pour sélectionner les lignes de vitesses, et en translation pour engager une vitesse sur la ligne sélectionnée à l'aide de son doigt de passage 1a. L'axe de commande 1 est actionné par un dispositif de commande externe (non représenté) comportant par exemple des câbles de commande (non représentés), dont un câble de sélection accroché sur le bras 11 et un câble de passage, ces deux câbles étant reliés au levier de changement de vitesses du conducteur. Les moyens de rappel en position de point mort (en principe la ligne de troisième et de quatrième rapport), sont constitués par un fourreau 4 et un ressort 8. Le fourreau 4 est solidaire en rotation de l'axe 1, et immobilisé en translation par rapport au carter de la boîte. Il présente à cet effet une lumière 6 de forme allongée, autorisant uniquement son débattement en rotation autour d'une pièce fixe 7 par rapport au carter de la boîte, par exemple un système de billage. Le ressort 8, enroulé autour du fourreau, présente deux branches d'extrémité 8a, 8b, en appui sur la pièce fixe 7, et sur une partie extérieure 9 du fourreau 4.

Comme indiqué plus haut, les deux branches 8a, 8b ne restent pas strictement parallèles à l'usage, de sorte qu'elles n'appuient pas simultanément sur chaque côté de la pièce 7 et de la partie extérieure 9, pour assurer le centrage souhaité de l'axe 1 en position de point mort. Or, sans ses quatre points d'appui simultanés (deux sur la pièce 7 et deux sur la partie 9), le ressort 8 n'est pas en mesure d'assurer le rappel de la commande interne dans une position stable de point mort.

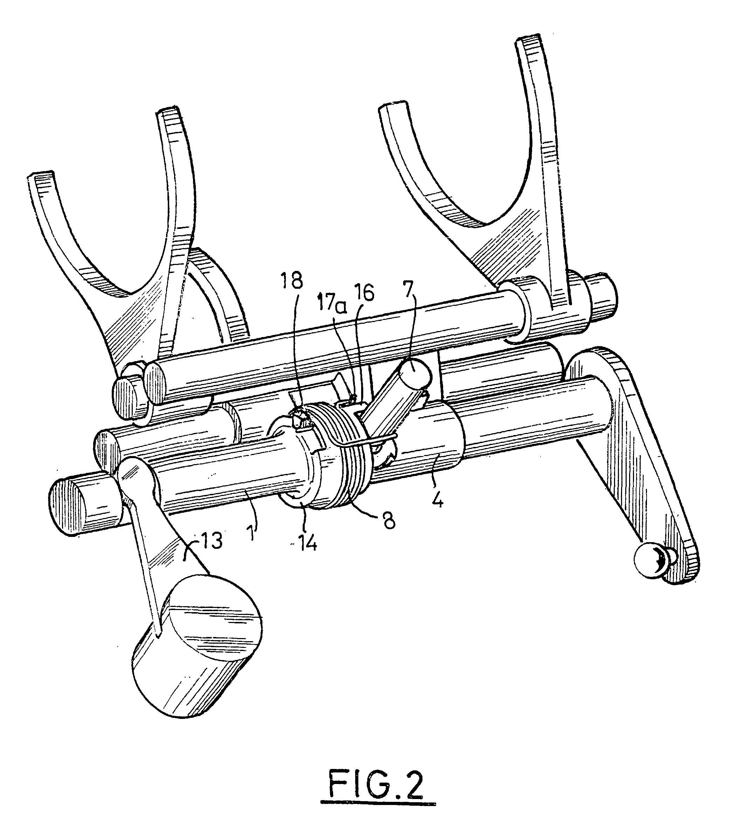

Sur la figure 2, qui correspond à l'invention, on a fait apparaître également le bras de commande en translation 13 de l'axe de commande 1. Ici, le fourreau 4 est surmonté d'une bague extérieure 14 qui présente un épaulement d'arrêt 16 contre une partie fixe 7 (par exemple le système de billage) de la boîte. Un premier ressort de rappel 8 est enroulé à l'extérieur de la bague 14 et prend appui par une de ses extrémité 8a contre la partie fixe 7. Enfin, on voit une extrémité 17a d'un second ressort 17 enroulé sous la bague 14, et prenant appui sur l'épaulement 16 de celle-ci, ainsi qu'un doigt 18 du fourreau 4, destiné à entraîner la bague 14 dans un seul sens de rotation.

Le dispositif de commande interne faisant l'objet de l'invention, comprend un axe de commande 1 du type qui sélectionne une ligne de vitesses par un mouvement de rotation, et qui assure le passage des vitesses au moyen d'un doigt de passage 1a, se plaçant suivant la ligne de sélection choisie, dans un crabot de commande de fourchette.

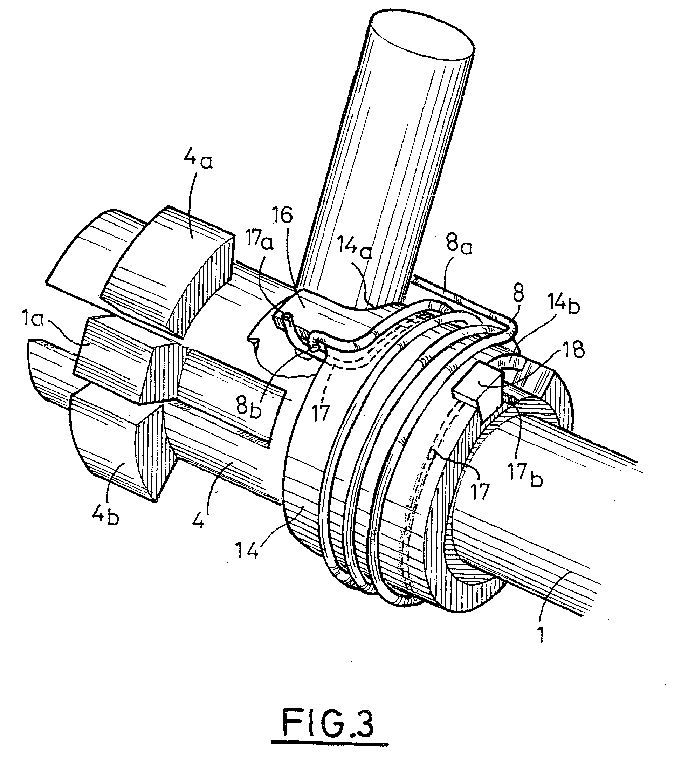

De façon connue, le fourreau 4 présente des moyens interdisant le déplacement des axes de fourchette non sélectionnés, constitués par les verrous 4a, 4b, mis en évidence sur les figures 3 à 5. Enfin, l'axe 1 présente des évidements (n'apparaissant pas sur les schémas), qui coopèrent avec le système de billage 7, pour arrêter en translation l'axe 1 en position de point mort ou de rapport engagé.

Le fourreau 4 concentrique à l'axe 1 comprend une lumière 6 de forme allongée. Lorsque l'axe 1 tourne, il entraîne en rotation le fourreau 4. La lumière 6, orientée selon sa circonférence, 1 et traversée par la partie fixe 7, coulisse alors le long de cette dernière, tout en empêchant le fourreau de suivre l'axe en translation lors de l'engagement des vitesses.

Les figures 3, 4 et 5 montrent également la seconde extrémité 17b du ressort intérieur 17 enroulé sous la bague 14, ce ressort prenant donc respectivement appui par ses deux extrémités 17a et 17b contre l'épaulement 16 de la bague 14 et contre le doigt 18 du fourreau 4.

Conformément à l'invention, les deux ressorts antagonistes 8 et 17 sollicitent l'axe de commande dans deux sens de rotation opposés, l'axe de commande fourreau et la bague étant rappelés conjointement vers la ligne de point mort par ces derniers.

Le doigt d'entraînement 18, solidaire du fourreau 4, déplace la bague 14 et le ressort intérieur 17 (sans le déformer) dans un premier sens, et déforme le ressort intérieur 17 dans le second sens. La bague 14 est positionnée au point mort par son épaulement 16 contre la partie fixe 7, et retenue contre celle-ci par le ressort extérieur 8. Elle est concentrique au fourreau 4, et est immobilisée en translation sur celui-ci par ses deux faces 14a, 14b prenant respectivement appui contre la partie fixe 7 et contre le doigt 18 du fourreau 5.

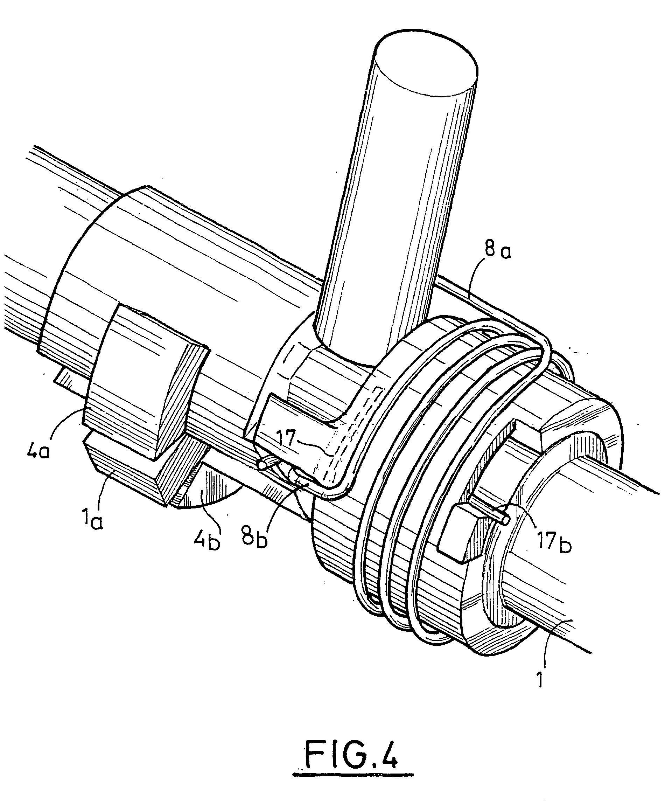

Lors de la sélection d'une première ligne de vitesses à l'écart de la ligne de point mort (cf. figure 4), l'axe de commande 1 entraîne en tournant le fourreau 4 par l'intermédiaire du doigt de passage 1a dans un premier sens de rotation. Le doigt d'entraînement 18 entraîne la bague 14 et le ressort intérieur 17, et comprime le ressort extérieur 8.

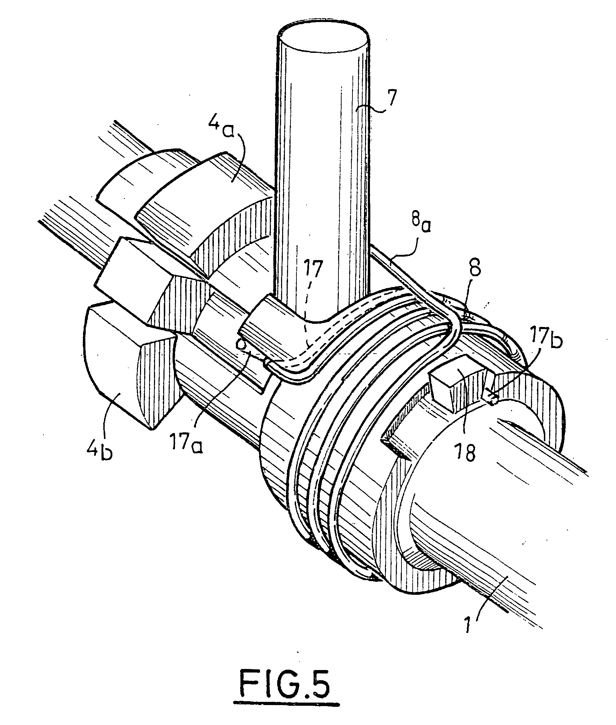

Pour sélectionner la ligne de vitesses opposée par rapport à la ligne de point mort (cf. figure 5), l'axe de commande 1 entraîne également en rotation le fourreau 4 par l'intermédiaire du doigt de passage 1a, mais dans le sens opposé. Toutefois, le doigt d'entraînement 18 du fourreau 4 n'entraîne pas la bague 14 mais déforme le ressort intérieur 17, tandis que l'épaulement 16 empêche la bague 14 de suivre l'axe de commande et le fourreau dans ce second sens de rotation.

Comme on l'aura compris, dans un premier sens de rotation de l'axe à l'écart de la ligne de point mort, la bague 14 entraînée par le doigt 18 comprime le ressort extérieur 8, et repousse sans le déformer le ressort intérieur 17. Lors du retour à partir de cette ligne de sélection, le ressort extérieur 8 assure le positionnement précis de l'axe 1 sur la ligne de point mort en plaquant par son extrémité 8a, l'épaulement 16 contre la partie fixe 7.

Dans le second sens de rotation de l'axe 1 à l'écart de la ligne de point mort, le fourreau n'entraîne pas la bague 14. En revanche son doigt d'entraînement 18 appuie sur l'extrémité 17b du ressort intérieur 17 en déformant celui-ci. Lors du retour à partir de cette ligne de sélection, le ressort intérieur assure, en se relâchant, le positionnement précis de l'axe 1 sur la ligne de point mort, en repoussant le fourreau 4 par son doigt 1.8 dans la position de la figure 3.

Le système de rappel à deux ressorts antagonistes décrit ci-dessus assure donc un retour et un maintien du dispositif de commande interne de la boîte sur la ligne de point mort de la boîte de vitesses.

## Revendications

1. Dispositif de commande interne de boîte de vitesses mécanique à arbres parallèles comportant un axe de commande (1) déplacé en rotation pour sélectionner une ligne de vitesses et en translation pour passer une vitesse sur la ligne sélectionnée, un doigt de passage (la) des vitesses solidaire de l'axe (1), des moyens d'interdiction (4, 4a, 4b) du passage des vitesses non sélectionnées, comprenant un fourreau cylindrique (4) solidaire en rotation de l'axe de commande (1), et rappelé vers la position de point mort par les deux ressorts antagonistes (8, 17) et des moyens de rappel élastique de l'axe (1) sur la ligne de point mort, comportant deux ressorts (8, 17) sollicitant l'axe (1) dans deux sens de rotation opposés **caractérisé en ce qu'**il comporte une bague (14) qui tourne avec le fourreau (4) autour de l'axe de commande (1) dans un premier sens de rotation de celui-ci en déformant un premier ressort (8).

2. Dispositif de commande selon la revendication 1, **caractérisé en ce que** le fourreau (4) entoure l'axe de commande (1).

3. Dispositif de commande selon la revendication 1 ou 2, **caractérisée en ce que** la bague (14) présente un épaulement (16) arrêtant celle-ci dans le second sens de rotation contre une partie fixe (7) de la boîte.

4. Dispositif de commande selon l'une des revendications précédentes, **caractérisé en ce que** la bague (14) est montée autour du fourreau (4) et **en ce que** ce dernier présente un doigt (18) entraînant la bague (14) ci dans un premier sens de rotation de l'axe (1) à l'écart de la ligne de point mort, sans déformer le second ressort (17).

5. Dispositif de commande selon l'une des revendications précédentes **caractérisé en ce que** le doigt (18) déforme le second ressort (17) sans entraîner la bague (14) ni déformer le premier ressort (8) dans le second sens de rotation de l'axe (1) à l'écart de la ligne de point mort.

6. Dispositif de commande selon la revendication 3, 4 ou 5, **caractérisé en ce que** le premier ressort (8) entoure la bague (14) et prend respectivement appui par ses deux extrémités (8a, 8b) contre la partie fixe (7) de la boîte et contre l'épaulement (16) de la bague (14).

7. Dispositif de commande selon la revendication 4 ou 5, **caractérisé en ce que** le second ressort (17) est enroulé entre le fourreau (4) et la bague (14) et prend appui respectivement par ses deux extrémités (17a, 17b), contre l'épaulement (16) de la bague (14) et contre le doigt d'entraînement (18) du fourreau (4).

8. Dispositif de commande selon l'une des revendications précédentes **caractérisé en ce que** l'axe de commande (1), le fourreau (4) et la bague (14) sont maintenus sur la ligne de point mort par l'action antagoniste des deux ressorts (8, 17).

## Patentansprüche

1. Innere Steuerungsvorrichtung eines mechanisches Getriebes mit parallelen Wellen, welches eine Steuerachse (1) aufweist, die in Drehung verstellt wird, um eine Linie von Gängen auszuwählen, und in Translation, um einen Gang auf der ausgewählten Linie einzulegen, einen Übergangsfinger (1a) der Gänge, welcher fest mit der Achse (1) verbunden ist, Mittel (4, 4a, 4b) einer Verhinderung eines Übergangs in nicht-ausgewählte Gänge, welche eine zylindrische Hülse (4) aufweisen, die in Drehung fest mit der Steuerachse (1) verbunden ist, und welche in Richtung zur TotpunktStellung durch zwei gegenwirkende Federn (8, 17) rückgestellt wird, und Mittel zur elastischen Rückstellung der Achse (1) auf die Totpunkt-Linie, welche zwei Federn (8, 17) aufweisen, welche die Achse (1) in zwei entgegengesetzte Drehrichtungen belasten, **dadurch gekennzeichnet, dass** sie einen Ring (14) aufweist, welcher mit der Hülse (4) um die Steuerachse (1) in eine erste Drehrichtung von dieser unter einem Verformen einer ersten Feder (8) dreht.

2. Steuervorrichtung gemäß Anspruch 1, **dadurch gekennzeichnet, dass** die Hülse (4) die Steuerachse (1) umgibt.

3. Steuervorrichtung gemäß Anspruch 1 oder 2, **dadurch gekennzeichnet, dass** der Ring (14) einen Ansatz (16) aufweist, welcher diesen in der zweiten Drehrichtung gegen ein festes Teil (7) des Getriebes arretiert.

4. Steuervorrichtung gemäß einem der vorhergehenden Ansprüche, **dadurch gekennzeichnet, dass** der Ring (14) um die Hülse (4) herum montiert ist, dass diese letztere einen Finger (18) aufweist, welcher den Ring (14) antreibt, in eine erste Drehrichtung der Achse (1) in Abstand der Linie des Totpunkts, ohne die zweite Feder (17) zu verformen.

5. Steuervorrichtung gemäß irgendeinem der vorhergehenden Ansprüche, **dadurch gekennzeichnet, dass** der Finger (18) die zweite Feder (17) verformt, ohne weder den Ring (14) anzutreiben, noch die erste Feder (8) in der zweiten Drehrichtung der Achse (1) in den Abstand der Linie des Totpunkts zu verformen.

6. Steuervorrichtung gemäß Anspruch 3, 4 oder 5, **dadurch gekennzeichnet, dass** die erste Feder (8) den Ring (14) umgibt und jeweils durch ihre zwei Enden (8a, 8b) gegen das feste Teil (7) des Getriebes und gegen den Ansatz (16) des Rings (14) sich abstützt.

7. Steuervorrichtung gemäß Anspruch 4 oder 5, **dadurch gekennzeichnet, dass** die zweite Feder (17) zwischen der Hülse (4) und dem Ring (14) aufgewickelt ist und jeweils durch ihre zwei Enden (17a, 17b) gegen den Ansatz (16) des Ringes (14) und gegen den Antriebsfinger (18) der Hülse (4) sich abstützt.

8. Steuervorrichtung gemäß einem der vorhergehenden Ansprüche, **dadurch gekennzeichnet, dass** die Steuerachse (1), die Hülse (4) und der Ring (14) auf der Linie des Totpunkts durch die gegenwirkende Wirkung der zwei Federn (8, 17) gehalten werden.

## Claims

1. Internal mechanical parallel shaft gearbox control device comprising a control spindle (1) moved rotatably to select a gear line and translatably to engage a gear in the selected line, a gear shifting finger (1a) attached to the spindle (1), means of preventing (4, 4a, 4b) the engagement of the unselected gears, comprising a cylindrical sleeve (4) rotatably attached to the control spindle (1), and returned to the neutral position by two opposing springs (8, 17) and flexible means of returning the spindle (1) to the neutral line, comprising two springs (8, 17) acting on the spindle (1) in two opposite directions of rotation, **characterised in that** it comprises a ring (14) that rotates with the sleeve (4) around the control spindle (1) in a first direction of rotation of the spindle by deforming a first spring (8).

2. Control device according to claim 1, **characterised in that** the sleeve (4) surrounds the control spindle (1).

3. Control device according to claim 1 or 2, **characterised that** that the ring (14) has a flange (16) preventing it from moving in the second direcrion of rotation against a fixed part (7) of the gearbox.

4. Control device according to any one of the previous claims, **characterised in that** the ring (14) is mounted around the sleeve (4) and the latter has a dog (18) driving the ring (14) in a first direction of rotation of the spindle (1) away from the neutral line, without deforming the second spring (17)

5. Control device according to any one of the previous claims, **characterised in that** the dog (18) deforms the second spring (17) without driving the ring (14) or deforming the first spring (8) in the second direction of rotation of the spindle (1) away from the neutral line.

6. Control device according to claim 3, 4, or 5, **characterised in that** the first spring (8) surrounds the ring (14) and its two ends (8a, 8b) respectively rest against the fixed part (7) of the gearbox and the flange (16) of the ring (14).

7. Control device according to claim 4 or 5, **characterised in that** the second spring (17) is wound between the sleeve (4) and the ring (14) and its two ends (17a, 17b) respectively rest against the flange (16) of the ring (14) and the dog (18) on the sleeve (4).

8. Control device according to any one of the previous claims, **characterised in that** the control spindle (1), the sleeve (4) and the ring (14) are held in the neutral line by the opposing action of the two springs (8, 17).
